# EUROPEAN PATENT SPECIFICATION

(11) **EP 0 676 738 B1**
(45) Date of publication and mention of the grant of the patent: **30.08.2000**
(21) Application number: 95301821.5
(22) Date of filing: 20.03.1995
(51) Int. Cl.: G06F 17/60, G09F 9/30, G09F 3/20

(54) **System and method for printing overlays for electronic displays devices**
System und Verfahren zum Drucken von Aufklebern für elektronische Anzeigevorrichtungen
Système et procédé pour l'impression d'étiquettes pour panneaux d'affichage électroniques

(30) Priority: 04.04.1994 US 223259
(43) Date of publication of application: 11.10.1995
(73) Proprietor: NCR International, Inc., Dayton, Ohio 45479 (US)
(72) Inventor: Goodwin, John Coker, III, Suwanee, Georgia 30174 (US)
(74) Representative: Cleary, Fidelma

(56) References cited:
- US-A- 4 101 366
- US-A- 5 172 314
- US-A- 5 241 467

## Description

The present invention relates to electronic displays such as electronic shelf labels, and more specifically to a system and method for printing overlays for electronic display devices.

Electronic shelf label systems typically include a plurality of electronic displays for each item in a store. The electronic displays are coupled to a central server from where prices for all displays can be changed.

In order to reduce the cost of such systems, only a limited amount of information , including price information, is displayed electronically. Item descriptions and product codes are not likely to change. Therefore, such information is typically displayed through signs or overlays attached to the electronic shelf label.

Known methods for labeling electronic shelf displays are labor-intensive and occur one product at a time. A store employee obtains the overlay information or new overlay information for an existing overlay, for the one product. The store employee must then return to attach the overlay to its respective electronic shelf label. US 5,172,314 discloses such a system for changing prices in a store database where paper tags may be printed with the updated prices for attachment to electronic shelf displays.

It is the object of the invention to provide a system and method for facilitating the printing of overlays for attachment to electronic shelf displays.

According to an aspect of the invention there is provided a system for printing a plurality of overlays for attachment to electronic shelf displays, comprising
database means for storing merchandise item data and electronic shelf display identification data;
a printer for printing the overlays;
computer server means including
data processing means for matching selected merchandise item data to electronic shelf display identification data; and
   overlay print processing means for creating an overlay print queue containing overlay information for each of the electronic shelf displays and for activating the printer to print the overlays in the overlay print queue, and wherein
the database means includes a first database at a first location where the electronic shelf displays are to be installed and a second database at a second location remote from the first location, the first database including the merchandise item data, the second database including electronic shelf display identification data, and the
computer server means includes a first server at the first location and a second server at the second location, the first server serving the download merchandise item from the first database to the second database and the second server including the data processing means for matching the merchandise item data to electronic shelf display identification data and to initialise the electronic shelf display with information obtained from the merchandise item data; and
the overlays are printed by a label machine at the second location for attachment to the initialised electronic shelf displays.

According to a second aspect of the present invention there is provided a method for printing a plurality of overlays for attachment to electronic shelf displays comprising the steps of:
obtaining merchandise item data and electronic shelf display identification data;
matching merchandise item data to electronic shelf display identification data;
creating an overlay print queue containing overlay information for each of the electronic shelf displays; and
activating a printer to print the overlays in the overlay print queue, further comprising the steps of
downloading the merchandise item data from a first database at a first location where the electronic shelf displays are to be installed to a second database at a second location remote from the first location, the second database including electronic shelf display identification data;
matching the merchandise item data to the electronic shelf display identification data;
initialising the electronic shelf displays with information obtained from the merchandise item data;
printing and attaching printed overlays to the initialised electronic shelf displays by a label machine at the second location.

The printing and attaching steps occur outside the store, preferably by the vendor of the electronic displays. For this purpose, a computer store downloads product information to another computer terminal located with the vendor. The vendor takes care of printing the overlays and attaching the overlays to the electronic shelf displays in order to reduce the store labor required to install the system.

An embodiment of the present invention will now be described, by way of example, with reference to the accompanying drawings in which:-
Fig. 1 is a block diagram of the system of the present invention;
Fig. 2 is a flow diagram illustrating the operation of the system of Fig. 2.

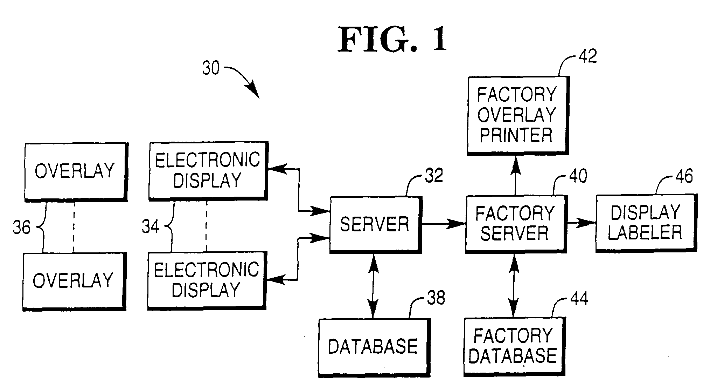

Referring now to Fig. 1, the system 30 of the present invention 30 includes server 32, electronic shelf displays 34, overlays 36, database 38, factory server 40, factory overlay printer 42, and factory database 44.

Server 32 controls operation of the in-store portion of system 30. Prices displayed at each of electronic shelf displays 34 may be changed by server 32.

Electronic shelf displays 34 preferably display price information for adjacent merchandise items, although additional information may also be displayed. Electronic shelf displays 34 may be coupled to server 32 through wire cables or through wireless transceivers mounted in both electronic shelf displays 34 and server 32.

Overlays 36 are mounted on electronic displays 34 and include printed information such as item descriptions, item bar code labels, item identification numbers, and promotional information.

Database 38 organizes product information.

Factory server 40 matches product information downloaded from server 32 with electronic shelf display identification numbers, and controls printing of overlays 36. Here, the term factory refers to the electronic shelf display factory. Thus, the matching process and labeling process require less store labor than previous methods.

Factory overlay printer 42 prints overlays 36.

Factory database 44 organizes product information and electronic shelf display identification numbers.

Display labeler 46 attaches overlays 36 to electronic shelf displays 34. Overlays 36 are preferably printed on adhesive paper in serial fashion so that each overlay may be more easily severed from the rest and separated from its non-adhesive backing by display labeler 46. After the adhesive backing has been removed, display labeler 46 aligns the overlay 36 with the electronic shelf display 34.

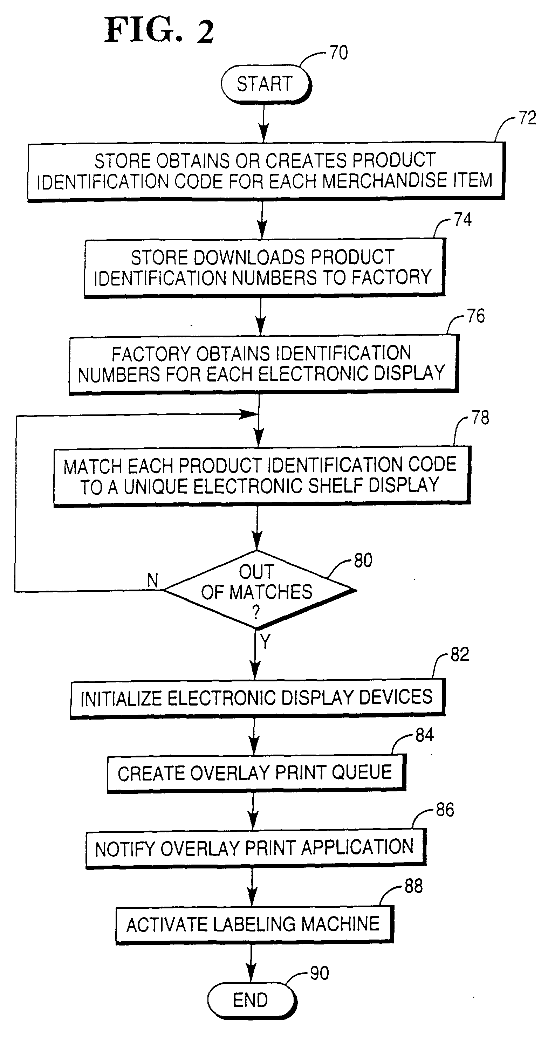

Turning now to Fig. 2, the overlay printing method associated with Fig. 1 begins with START 70.

In step 72, server 32 obtains a product identification code for each merchandise item from inventory database 38. If a merchandise item is new, its product identification number may be entered into the database at this time.

In step 74, server 32 downloads the product identification information to factory server 40.

In step 76, factory server 40 obtains identification numbers for each electronic display 34.

In step 78, factory server 40 matches each product identification code to a unique electronic shelf display 34 and stores the association in its database 44.

In step 80, factory server 40 determines whether there are any remaining product identification numbers to be matched with electronic shelf displays 34. If so, then the method loops back to step 78 until there are no product identification numbers left.

If there are no remaining product identification numbers to be matched with electronic shelf displays 34, the method proceeds to step 82, in which factory server 40 initializes electronic shelf displays 34 with current information such as item price, unit price, location code, stock count, facings, and unique identifiers, as appropriate.

In step 84, factory server 40 organizes the product information for printing and executes an overlay printing application which creates an overlay print queue including each of overlays 36. The print queue may be created manually or automatically, depending upon the needs of the factory process.

In step 86, factory server 40 notifies the overlay print application to begin printing the overlays in the print queue by factory overlay printer 42. This step may be performed automatically or manually with operator intervention.

In step 88, factory server 40 activates display labeler 46 which attaches overlays 36 to electronic shelf displays 34.

Advantageously, the above system requires less store labor as the matching and labeling steps are performed at the electronic shelf display factory.

In step 90, the method ends.

## Claims

1. A system for printing a plurality of overlays (36) for attachment to electronic shelf displays (34), comprising
database means (38, 44) for storing merchandise item data and electronic shelf display identification data;
a printer (42) for printing the overlays (36);
computer server means (32, 40) including
data processing means for matching selected merchandise item data to electronic shelf display identification data; and
overlay print processing means for creating an overlay print queue containing overlay information for each of the electronic shelf displays and for activating the printer to print the overlays in the overlay print queue, characterized in that
the database means (38, 44) includes a first database (38) at a first location where the electronic shelf displays (34) are to be installed and a second database (44) at a second location remote from the first location, the first database (38) including the merchandise item data, the second database including electronic shelf display identification data, and in that the
computer server means (32, 40) includes a first server (32) at the first location and a second server (40) at the second location, the first server (32) serving the download merchandise item from the first database (38) to the second database (44), and the second server (40) including the data processing means for matching the merchandise item data to electronic shelf display identification data and to initialise the electronic shelf display with information obtained from the merchandise item data; and in that
the overlays are printed by a label machine (46) at the second location for attachment to the initialised electronic shelf displays (34).

2. A method for printing a plurality of overlays for attachment to electronic shelf displays (34) comprising the steps of:
obtaining merchandise item data and electronic shelf display identification data;
matching merchandise item data to electronic shelf display identification data;
creating an overlay print queue containing overlay information for each of the electronic shelf displays (34); and
activating a printer (42) to print the overlays (36) in the overlay print queue,
characterized by the step of
downloading the merchandise item data from a first database (38) at a first location where the electronic shelf displays are to be installed to a second database (44) at a second location remote from the first location, the second database including electronic shelf display identification data;
matching the merchandise item data to the electronic shelf display identification data;
initialising the electronic shelf displays with information obtained from the merchandise item data; and
printing and attaching printed overlays (36) to the initialised electronic shelf displays (34) by a label machine (46) at the second location.

## Patentansprüche

1. System zum Drucken einer Mehrzahl von Aufklebern (36) zur Anbringung an elektronischen Regaldisplays (34) mit
einer Datenbank (38,44) zur Speicherung von Artikeldaten und Identifizierungsdaten der elektronischen Regaldisplays;
einem Drucker (42) zum Drucken der Aufkleber (36);
einem Computer-Server (32,40) mit einer Datenverarbeitungseinrichtung zur Zuordnung ausgewählter Artikeldaten zu den Identifizierungsdaten der elektronischen Regaldisplays,
ferner mit einer Aufkleber-Druckverarbeitungseinrichtung zur Erstellung einer Aufkleber-Druckreihenfolge, welche Aufkleber-Information für jedes der elektronischen Regaldisplays enthält, und zur Aktivierung des Druckers zum Drucken der Aufkleber in der Reihenfolge,
**dadurch gekennzeichnet,**
daß die Datenbank (38,44) eine erste Datei (38) an einer ersten Stelle, an der die elektronischen Regaldisplays (34) installiert werden sollen, und eine zweite Datei (44), an einer zweiten, von der ersten entfernten Stelle enthält, wobei die erste Datei (38) die Artikeldaten enthält und die zweite Datei Identifizierungsdaten für die elektronischen Regaldisplays enthält;
und daß der Computer-Server (32,40) einen ersten Server (32) an der ersten Stelle und einen zweiten Server (40) an der zweiten Stelle enthält, wobei der erste Server (32) dem Herunterladen der Artikeldaten aus der ersten Datei (38) in die zweite Datei (44) dient und der zweite Server (40) die Datenverarbeitungseinrichtung für die Zuordnung der Artikeldaten zu den Identifizierungsdaten der elektronischen Regaldisplays und für die Beaufschlagung der elektronischen Datendisplays mit von den Artikeldaten stammender Information enthält;
und daß die Aufkleber an der zweiten Stelle zur Anbringung an den beaufschlagten elektronischen Regaldisplays (34) von einem Auszeichnungsgerät (46) gedruckt werden.

2. Verfahren zum Drucken einer Mehrzahl von Aufklebern zur Anbringung an elektronischen Regaldisplays (34) mit den Schritten:
Bereitstellung von Artikeldaten und Informationsdaten für die elektronischen Regaldisplays;
Zuordnung der Artikeldaten zu den Identifizierungsdaten der elektronischen Regaldisplays;
Erstellung einer Aufkleber-Druckreihenfolge, welche Information für jedes der elektronischen Regaldisplays (34) enthält; und
Aktivierung eines Druckers (42) zum Drucken der in der Aufkleber-Druckreihenfolge enthaltenen Aufkleber (34);
**gekennzeichnet durch** die Schritte:
Herunterladen der Artikeldaten aus der ersten Datei (38) an einer ersten Stelle, an der die elektronischen Regaldisplays zu intallieren sind, in eine zweite Datei (44) an einer zweiten, von der ersten entfernten Stelle, wobei die zweite Datei Identifizierungsdaten der elektronischen Regaldisplays enthält;
Zuordnung der Artikeldaten zu den Identifizierungsdaten der elektronischen Regaldisplays;
Beaufschlagung der elektronischen Regaldisplays mit von den Artikeldaten stammenden Informationen; und
Drucken und Anbringen der gedruckten Aufkleber (36) an die beaufschlagten elektronischen Regaldisplays (34) durch ein Aufzeichnungsgerät (46) an der zweiten Stelle.

## Revendications

1. Un système pour imprimer une pluralité de recouvrements (36) pour fixation aux affichages de rayon électroniques (34), comprenant
un moyen base de données (38, 44) pour mémoriser les données de marchandises et les données d'identification d'affichage de rayon électronique;
une imprimante (42) pour imprimer les recouvrements (36);
un moyen serveur (32, 40) comportant
un moyen de traitement des données pour faire correspondre des données de marchandises sélectionnées avec des données d'identification d'affichage de rayon électronique; et
un moyen de traitement d'impression des recouvrements pour créer une file d'impression des recouvrements contenant des informations relatives aux recouvrements pour chacun des affichages de rayon électroniques et pour activer l'imprimante pour qu'elle imprime les recouvrements dans la file d'impression des recouvrements, et dans quoi
le moyen base de données (38, 44) comporte une première base de données (38) à un premier emplacement où les affichages de rayon électroniques (34) doivent être installés et une deuxième base de données (44) à un deuxième emplacement éloigné du premier emplacement, la première base de données (38) comportant les données de marchandises, la deuxième base de données comportant les données d'identification d'affichage de rayon électronique, et
le moyen serveur (32, 40) comporte un premier serveur (32) au premier emplacement et un deuxième serveur (40) au deuxième emplacement, le premier serveur (32) servant la marchandise de transfert de la première base de données (38) à la deuxième base de données (44) et le deuxième serveur (40) comportant le moyen de traitement des données pour faire correspondre les données de marchandises avec les données d'identification d'affichage de rayon électronique et pour initialiser l'affichage de rayon électronique avec des informations obtenues à partir des données de marchandises; et
les recouvrements sont imprimés par une machine à étiquettes (46) au deuxième emplacement pour fixation aux affichages de rayon électroniques initialisés (34).

2. Une méthode pour imprimer une pluralité de recouvrements pour fixation aux affichages de rayon électroniques (34) comprenant les étapes suivantes:
l'obtention des données de marchandises et des données d'identification d'affichage de rayon électronique;
la mise en correspondance des données de marchandises avec les données d'identification d'affichage de rayon électronique;
la création d'une file d'impression des recouvrements contenant des informations relatives aux recouvrements pour chacun des affichages de rayon électroniques (34); et
l'activation d'une imprimante (42) pour imprimer les recouvrements (36) dans la file d'impression des recouvrements, comprenant les étapes suivantes:
le transfert des données de marchandises d'une première base de données (38) à un premier emplacement où les affichages de rayon électroniques doivent être installés à une deuxième base de données (44) à un deuxième emplacement éloigné du premier emplacement, la deuxième base de données comportant des données d'identification d'affichage de rayon électronique;
la mise en correspondance des données de marchandises avec les données d'identification d'affichage de rayon électronique;
l'initialisation des affichages de rayon électroniques avec des informations obtenues à partir des données de marchandises; et
l'impression et la fixation des recouvrements imprimés (36) aux affichages de rayon électroniques initialisés (34) à l'aide d'une machine à étiquettes (46) au deuxième emplacement.
